# EUROPÄISCHE PATENTSCHRIFT

(11) **EP 4 150 237 B1**
(45) Veröffentlichungstag und Bekanntmachung des Hinweises auf die Patenterteilung: **28.10.2026**
(21) Anmeldenummer: 21726611.3
(22) Anmeldetag: 11.05.2021
(51) Int. Cl.: F16J 15/34

(54) **GLEITRINGDICHTUNGSANORDNUNG FÜR HOCHTEMPERATURANWENDUNGEN**
SLIDE RING SEAL ASSEMBLY FOR HIGH TEMPERATURE APPLICATIONS
ENSEMBLE JOINT D'ÉTANCHÉITÉ À BAGUE COULISSANTE POUR APPLICATIONS À HAUTE TEMPÉRATURE

(30) Priorität: 14.05.2020 DE 102020113068
(43) Veröffentlichungstag der Anmeldung: 22.03.2023
(73) Patentinhaber: EagleBurgmann Germany GmbH & Co. KG, 82515 Wolfratshausen (DE)
(72) Erfinder: FESL, Andreas, 83624 Otterfing (DE); HELLMIG, Benjamin, 81543 München (DE)
(74) Vertreter: Hoefer & Partner Patentanwälte mbB
(86) Internationale Anmeldenummer: PCT/EP2021/062522
(87) Internationale Veröffentlichungsnummer: WO 2021/228884

(56) Entgegenhaltungen:
- EP-A1- 3 293 426
- DE-A1- 102012 022 465
- DE-A1- 102012 022 465
- DE-U1- 20 217 983
- DE-U1- 20 217 983
- DE-U1- 202005 011 137
- DE-U1- 29 612 203
- US-A- 5 172 918
- US-A- 5 700 013
- US-A- 5 700 013

## Beschreibung

Die vorliegende Erfindung betrifft eine Gleitringdichtungsanordnung für Hochtemperaturanwendungen, insbesondere für Temperaturen von abzudichtenden gasförmigen Medien über 200°C, insbesondere größer als 800°C.

Gleitringdichtungsanordnungen sind aus dem Stand der Technik in unterschiedlichen Ausgestaltungen bekannt. Bei Hochtemperaturanwendungen mit Temperaturen größer als 200°C, insbesondere größer als 500°C, sind an die Bauteile der Gleitringdichtungsanordnung höchste Ansprüche zu stellen. Dies betrifft insbesondere Nebendichtungen, welche bei Hochtemperaturanwendungen nicht mehr aus PTFE oder als O-Ringe aus einem elastischen Material ausgebildet sein können. Von daher sind bei derartigen Hochtemperaturanwendungen üblicherweise mehrere Gleitringdichtungsanordnungen in Reihe nacheinander geschaltet, was jedoch die Kosten für die Abdichtung derartiger Maschinen signifikant erhöht. Ferner ist durch die in Reihe-Schaltung der Gleitringdichtungsanordnungen ein großer Axialbedarf an einem abzudichtenden rotierenden Bauteil notwendig, was derartige Maschinen in Axialrichtung in unerwünschter Weise verlängert. Bei Hochtemperaturanwendungen werden daher bisher sehr teure und aufwändig herstellbare Metallbälge verwendet. Diese müssen, um neben hohen Temperaturen auch hohe Drücke aushalten zu können, aufwändig verstärkt werden, was derartige Metallbälge weiter verteuert.

Ein weiterer Problemkreis bei Hochtemperaturanwendungen ergibt sich durch die üblicherweise sehr hohen Drücke, welche zusätzliche Leckageprobleme insbesondere über Nebendichtungen verursachen können.

Die DE 10 2012 022465 A1, DE 202 17 983 U1, DE 296 12 203 U1 und US 5 700 013 A zeigen Gleitringdichtungsanordnungen nach dem Oberbegriff des Anspruchs 1. US 5,172,918 offenbart auch eine Gleitringdichtungsanordnung.

Es ist daher Aufgabe der vorliegenden Erfindung, eine Gleitringdichtungsanordnung bereitzustellen, welche bei einfachem und kostengünstigem Aufbau eine sichere Hochtemperaturabdichtung eines abzudichtenden gasförmigen Mediums ermöglicht.

Diese Aufgabe wird durch eine Gleitringdichtungsanordnung mit den Merkmalen des Anspruchs 1 gelöst, die Unteransprüche zeigen bevorzugte Weiterbildungen der Erfindung.

Die erfindungsgemäße Gleitringdichtungsanordnung mit den Merkmalen des Anspruchs 1 weist demgegenüber den Vorteil auf, dass auch bei Hochtemperaturanwendungen mit Temperaturen > 200°C, insbesondere > 500°C, weiter insbesondere > 800°C, und bei hohen Drücken, insbesondere >als 80x10⁵ Pa, weiter insbesondere > als 250x10⁵ Pa eine sichere Abdichtung sowohl an Gleitflächen der Gleitringe als auch an vorhandenen Nebendichtungen möglich ist. Dies wird erfindungsgemäß dadurch erreicht, dass die Gleitringdichtungsanordnung eine Gleitringdichtung mit einem rotierenden Gleitring mit einer ersten Gleitfläche und einem stationären Gleitring mit einer zweiten Gleitfläche aufweist, welche zwischen sich einen Dichtspalt definieren. Ferner ist eine Vorspanneinrichtung vorgesehen, um einen der beiden Gleitringe in Axialrichtung X-X der Gleitringdichtungsanordnung vorzuspannen. Weiterhin ist ein Nebendichtelement an einer Rückseite des axial vorgespannten Gleitrings angeordnet. Bevorzugt ist der stationäre Gleitring axial vorgespannt. Weiterhin umfasst die Gleitringdichtungsanordnung eine Hülse, welche radial innerhalb des Nebendichtelements angeordnet ist. Erfindungsgemäß wird unter einer Hülse ein separates, hülsenförmiges, hohlzylindrisches Bauteil verstanden oder ein hülsenförmiger Fortsatz z.B. an einem Gehäusebauteil. Das Nebendichtelement ist an einer Rückseite des axial vorgespannten Gleitrings angeordnet und weist eine ringförmig geschlossene, d.h. in Umfangsrichtung geschlossene, Dichtkante auf. Die Dichtkante steht dabei an einer zum axial vorgespannten Gleitring gerichteten Seite des Nebendichtelements in Axialrichtung X-X vor und dichtet an der Rückseite des axial vorgespannten Gleitrings ab. Dadurch kann eine ringförmige Abdichtung zwischen dem Nebendichtelement und dem axial vorgespannten Gleitring durch die Dichtkante erreicht werden. Weiterhin dichtet das Nebendichtelement ferner mit einer inneren Umfangsfläche am Außenumfang der Hülse ab. Somit weist das Nebendichtelement zwei Abdichtungsbereiche auf, nämlich einerseits die zur Rückseite des axial vorgespannten Gleitrings gerichtete Dichtkante sowie die innere Umfangsfläche des Nebendichtelements. Dabei ist die Vorspanneinrichtung derart angeordnet, dass die axiale Vorspannung des axial vorgespannten Gleitrings über das Nebendichtelement erfolgt. Somit kann eine sichere Abdichtung an der Rückseite des axial vorgespannten Gleitrings durch die Dichtkannte des Nebendichtelements ermöglicht werden. Eine Vorspannkraft der Vorspanneinrichtung wird somit über das Nebendichtelement in Axialrichtung X-X auf den axial vorgespannten Gleitring gerichtet.

Um einerseits eine möglichst einfache Montage des Nebendichtelements zu ermöglichen und andererseits eine besonders gute Abdichtung des Nebendichtelements an der inneren Umfangsfläche bereitzustellen, ist das Nebendichtelement in mehrere Segmente unterteilt. Die Unterteilung ist vorzugsweise in drei einzelnen Segmenten ausgeführt. Die benachbart zueinander angeordneten Segmente weisen dabei entsprechend Überlappungsbereiche auf, an denen die Segmente sich in Axialrichtung und/oder Radialrichtung überlappen.

Vorzugsweise ist das Nebendichtelement aus einem harten Material mit eine Vickershärte HV von größer oder gleich 2000 HV hergestellt. Dadurch wird die notwendige Robustheit gegenüber den hohen Temperaturen und/oder hohen Drücken des Nebendichtelements sichergestellt. Weiterhin kann dadurch eine sichere Vorspannung des axial vorgespannten Gleitrings über das Nebendichtelement realisiert werden. Das Nebendichtelement ist besonders bevorzugt aus einem keramischen Material hergestellt. Vorzugsweise ist das Nebendichtelement aus Siliziumkarbid (SiC) oder Wolframkarbid (WC) hergestellt. Somit ist das Nebendichtelement elastomerfrei und unelastisch, so dass eine sichere Kraftübertragung für die axiale Vorspannung des Gleitrings von der Vorspanneinrichtung über das Nebendichtelement auf den axial vorgespannten Gleitring möglich ist.

Besonders bevorzugt ist eine Härte des Nebendichtelements mindestens gleich groß wie eine Härte des axial vorgespannten Gleitrings. Vorzugsweise ist die Härte des Nebendichtelements größer als die Härte des axial vorgespannten Gleitrings. Gemäß einer alternativen Ausgestaltung der Erfindung sind der axial vorgespannte Gleitring und das Nebendichtelement aus dem gleichen Material hergestellt. Weiter bevorzugt sind der axial vorgespannte Gleitring, das Nebendichtelement und die Hülse aus dem gleichen Material hergestellt, insbesondere Siliziumkarbid.

Weiter bevorzugt sind die Flächen, an denen der axial vorgespannte Gleitring und das Nebendichtelement sowie das Nebendichtelement und die Hülse miteinander in Kontakt stehen, mittels eines Feinbearbeitungsverfahrens, insbesondere Schleifen und/oder Polieren oder dergleichen bearbeitet, um eine möglichst geringe Rauheit an den Kontaktflächen zwischen den Bauteilen zu erreichen.

Besonders bevorzugt weist das Nebendichtelement an einer Stirnseite der Dichtkante eine erste Beschichtung auf. Die Beschichtung ist dabei vorzugsweise derart ausgeführt, dass eine Rauheit der Beschichtung die im Kontakt mit der Rückseite des axial vorgespannten Gleitrings liegt, möglichst gering ist. Vorzugsweise ist die Beschichtung aus Diamant oder Wolframdisulfid.. Weiter bevorzugt umfasst das Nebendichtelement eine zweite Beschichtung an der inneren Umfangsfläche, welche in Kontakt mit der Hülse steht. Die zweite Beschichtung ist vorzugsweise aus dem gleichen Material wie die erste Beschichtung ausgebildet und weist weiter bevorzugt eine gleiche Beschichtungsdicke auf.

Gemäß einer weiteren bevorzugten Ausgestaltung der Erfindung weist die Hülse an ihrem Außenumfang eine dritte Beschichtung auf. Weiter bevorzugt weist auch die Rückseite des axial vorgespannten Gleitrings eine vierte Beschichtung auf. Vorzugsweise sind die dritte und vierte Beschichtung dabei aus dem gleichen Material wie die erste und/oder zweite Beschichtung vorgesehen, besonders bevorzugt aus Diamant oder Wolframdisulfid. Alle Beschichtungen sind vorzugsweise aus dem gleichen Material und mit gleicher Dicke ausgeführt.

Bei der segmentierten Ausführung des Nebendichtelements ist weiter bevorzugt eine Einrichtung zur radialen Vorspannung der Segmente vorgesehen. Diese Einrichtung ist beispielsweise eine Ringfeder oder eine Vielzahl von einzelnen Federn, welche die Segmente radial nach innen vorspannen. Dadurch liegen die Segmente sehr eng am Außenumfang der Hülse an, wodurch eine Abdichtung des Nebendichtelements an der inneren Umfangsfläche weiter vergrößert wird.

Um eine möglichst einfache Herstellung der Dichtkante und insbesondere auch eine ausreichende Kontaktfläche zwischen der Dichtkante und der Rückseite des axial vorgespannten Gleitrings bereitzustellen, weist die Dichtkante vorzugsweise einen viereckigen Querschnitt, insbesondere einen rechteckigen Querschnitt auf. Dabei ist bevorzugt eine radiale Höhe H größer oder gleich als einer axialen Länge L der Dichtkante.

Vorzugsweise ist die Dichtkante an einem radial nach innen gerichteten Eckbereich des Nebendichtelementes an der zur Rückseite des axial vorgespannten Gleitringes angeordnet. Dadurch kann eine in hohem Maße entlastete Gleitringdichtung bereitgestellt werden.

Weiter bevorzugt weist das Nebendichtelement ferner eine weitere Dichtkante auf, welche an einer inneren Umfangsfläche des Nebendichtelementes angeordnet ist. Die geometrische Form des zur Rückseite des axial vorgespannten Gleitringes und der radial nach innen vorstehenden weiteren Dichtkante ist vorzugsweise derart ausgebildet, dass beide Dichtkanten einen gleichen Querschnitt aufweisen.

Die Gleitringdichtungsanordnung ist zur Abdichtung von gasförmigen Medien eingerichtet. Durch die erfindungsgemäße Ausgestaltung kann dabei auch bei Hochtemperaturanwendungen und bei sehr hohen Drücken eine Nacheinanderschaltung von mehreren Gleitringdichtungen in Reihe verzichtet werden.

Nachfolgend werden unter Bezugnahme auf die begleitende Zeichnung mehrere Ausführungsbeispiele der Erfindung im Detail beschrieben. In der Zeichnung ist:
- Fig. 1: eine schematische Schnittansicht einer Gleitringdichtungsanordnung gemäß einem ersten Ausführungsbeispiel der Erfindung,
- Fig. 2: eine schematische Teilschnittansicht eines Nebendichtelements der Gleitringdichtungsanordnung von Fig. 1,
- Fig. 3: eine schematische Draufsicht des Nebendichtelements von Fig. 2,
- Fig. 4: eine schematische Teilschnittansicht des Nebendichtelements von Fig. 3,
- Fig. 5: eine schematische Schnittansicht einer Gleitringdichtungsanordnung gemäß einem zweiten Ausführungsbeispiel der Erfindung,
- Fig. 6: eine schematische Schnittansicht einer Gleitringdichtungsanordnung gemäß einem dritten Ausführungsbeispiel der Erfindung,
- Fig. 7: eine schematische Schnittansicht einer nicht erfindungsgemäßen Gleitringdichtungsanordung,
- Fig. 8: eine schematische Darstellung des Nebendichtelementes von Fig. 7 in axialer Richtung, und
- Fig. 9: eine schematische Schnittansicht einer Gleitringdichtungsanordnung gemäss einem vierten Ausführungsbeispiel der Erfindung.

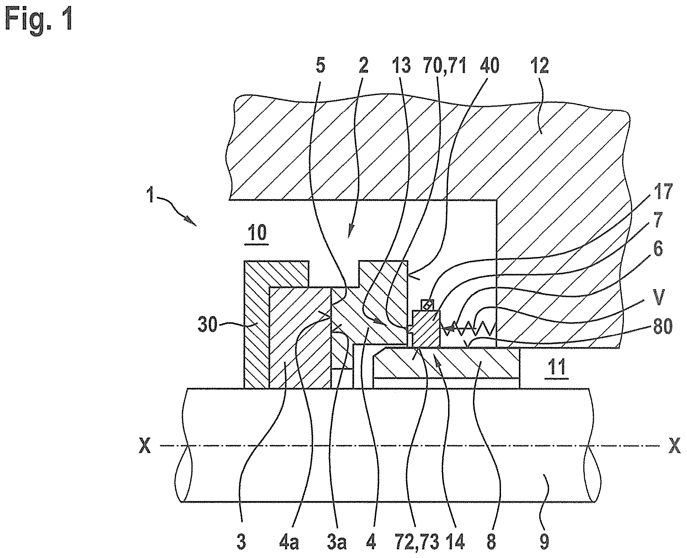

Nachfolgend wird unter Bezugnahme auf die Figuren 1 bis 4 eine Gleitringdichtungsanordnung 1 gemäß einem ersten bevorzugten Ausführungsbeispiel der Erfindung im Detail beschrieben. Wie aus Fig. 1 ersichtlich ist, umfasst die Gleitringdichtungsanordnung 1 eine Gleitringdichtung 2 mit einem rotierenden Gleitring 3 mit einer ersten Gleitfläche 3a und einem stationären Gleitring 4 mit einer zweiten Gleitfläche 4a. Zwischen den Gleitflächen der Gleitringe 3, 4 ist ein Dichtspalt 5 definiert.

Die Gleitringdichtung 2 dichtet einen Produktbereich 10 von einem Atmosphärenbereich 11 ab. Ferner umfasst die Gleitringdichtungsanordnung 1 eine Vorspanneinrichtung 6, welche, wie aus Fig. 1 ersichtlich ist, eine Vielzahl von Spiralfedern (in Fig. 1 nur eine Spiralfeder dargestellt) umfasst, welche entlang des Umfangs angeordnet sind und die Gleitringdichtung 2 in Axialrichtung X-X vorspannen.

Ferner umfasst die Gleitringdichtungsanordnung 1 ein Nebendichtelement 7, welches am axial vorgespannten Gleitring, welcher in diesem Ausführungsbeispiel der stationäre Gleitring 4 ist, an dessen Rückseite 40 angeordnet ist.

Die Vorspanneinrichtung 6 ist dabei zwischen dem Nebendichtelement 7 und einem Gehäuse 12 angeordnet. Somit erfolgt eine Vorspannung des stationären Gleitrings 4 in Axialrichtung X-X mittels der Vorspanneinrichtung 6 über das Nebendichtelement 7. Die Vorspannkraft ist in Fig. 1 durch den Pfeil V angedeutet.

Weiterhin umfasst die Gleitringdichtungsanordnung 1 eine hohlzylindrische Hülse 8, welche ortsfest angeordnet ist. Die Hülse 8 ist beispielsweise mit dem Gehäuse 12 verbunden. Die Hülse 8 ist dabei radial innerhalb des Nebendichtelements 7 angeordnet.

Der rotierende Gleitring 3 ist mittels eines Gleitringträgers 30 mit einer rotierenden Welle 9 verbunden.

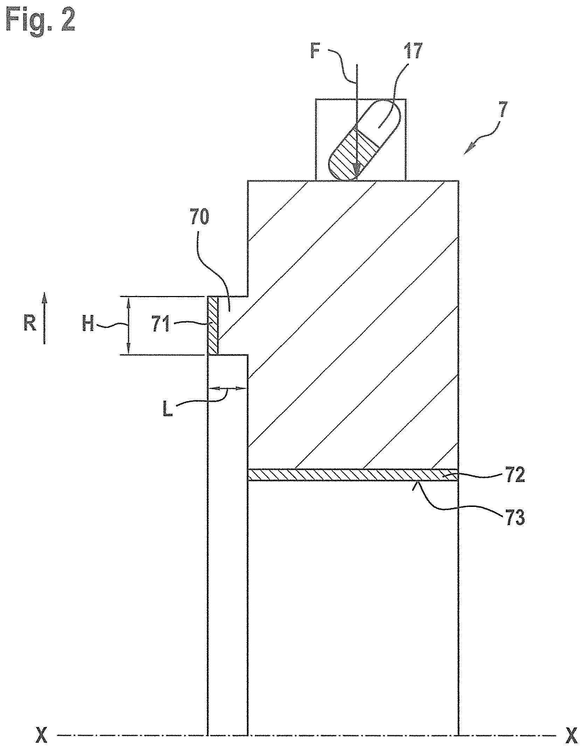

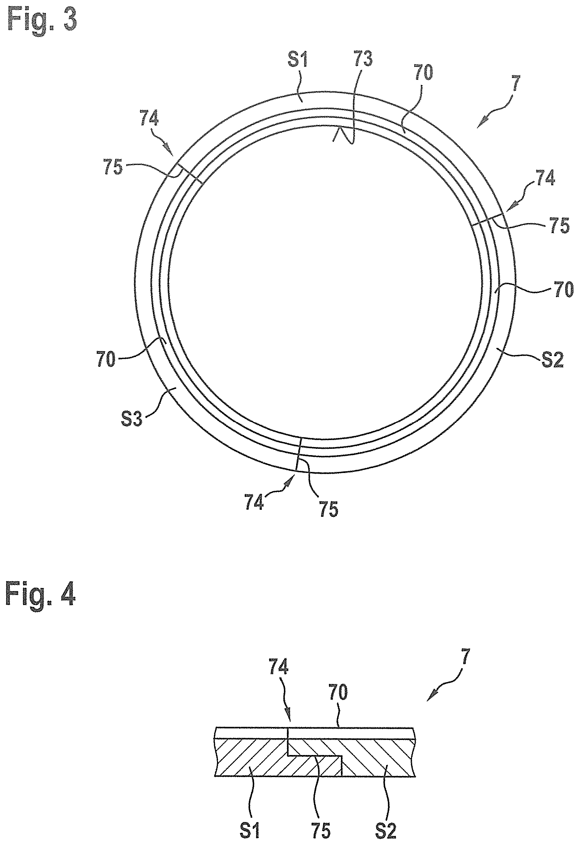

Das Nebendichtelement 7 ist im Detail aus den Figuren 2 bis 4 ersichtlich. Insbesondere wie in Fig. 3 gezeigt, umfasst das Nebendichtelement 7 eine in Umfangsrichtung ringförmig geschlossene erste Dichtkante 70. Die Dichtkante 70 steht dabei vom Nebendichtelement 7 in Axialrichtung X-X in Richtung des axial vorgespannten Gleitrings vor. Dabei liegt, wie aus Fig. 1 ersichtlich ist, die Dichtkante 70 an der Rückseite 40 des stationären Gleitrings 4 an und dichtet dort an einem ersten Dichtbereich 13 ab.

Wie aus Fig. 1 ersichtlich ist, weist das Nebendichtelement 7 somit einen ersten Abdichtbereich 13 an der Dichtkante 70 auf, an welchem eine Abdichtung zum stationären Gleitring 4 erfolgt, sowie einen zweiten Abdichtbereich 14 an einer inneren Umfangsfläche 73 auf, an welchem eine Abdichtung zwischen dem Nebendichtelement 7 und einem Außenumfang der Hülse 8 erfolgt. Dabei ist die Kontaktfläche am ersten Dichtbereich der Dichtkante 70 sehr viel kleiner als am zweiten Dichtbereich zwischen der inneren Umfangsfläche 73 und der Hülse 8.

Wie weiter aus Fig. 2 ersichtlich ist, ist die Dichtkante 70 derart ausgebildet, dass eine Höhe H in Radialrichtung R größer ist als eine Länge L der Dichtkante in Axialrichtung X-X.

Wie weiter aus den Figuren 3 und 4 ersichtlich ist, ist das Nebendichtelement 7 in Umfangsrichtung aus mehreren Segmenten S1, S2, S3 hergestellt, welche jeweils eine Teilkreisform aufweisen. In diesem Ausführungsbeispiel sind drei Segmente S1, S2 und S3 vorgesehen. An den jeweiligen Übergängen zwischen den Segmenten S1, S2, S3 sind somit drei Überdeckungsbereiche 74 ausgebildet, welche im Detail aus Fig. 4 ersichtlich ist. An den Überdeckungsbereichen 74 ist jeweils ein Segmentspalt 75 vorgesehen, an welchem sich die jeweiligen Segmente S1, S2, S3 teilweise überdecken.

Das Nebendichtelement 7 ist aus einem harten Material, beispielsweise aus einem Keramikmaterial, insbesondere SiC, hergestellt. Somit ist die Gleitringdichtungsanordnung 1 elastomerfrei und weist auch kein Bauteil aus einem anderen elastischen Material, insbesondere PTFE, was üblicherweise für Nebendichtelemente verwendet wird, auf. Somit ist die Gleitringdichtungsanordnung 1 für Hochtemperaturanwendungen mit Temperaturen größer als 200°C und Hochdruckanwendungen mit Drücken größer als 80x10⁵ Pa ausgelegt.

Das Nebendichtelement 7 weist ferner eine erste Beschichtung 71 an einer Stirnseite der Dichtkante 70 auf sowie eine zweite Beschichtung 72 an der inneren Umfangsfläche 73 auf.

Weiterhin weist die Hülse 8 eine dritte Beschichtung 80 an ihrem Außenumfang auf. Die Beschichtungen sind vorzugsweise aus Diamant oder Wolframdisulfid vorgesehen.

Die Beschichtungen ermöglichen in diesem Anwendungsfall insbesondere eine möglichst glatte Kontaktfläche an den Abdichtbereichen 13, 14 zwischen den Bauteilen Nebendichtelement 7 und stationärer Gleitring 4 sowie Nebendichtelement 7 und Hülse 8. Die Beschichtungen ermöglichen dabei insbesondere einen Verzicht auf Nachbearbeitungsschritte der miteinander in Kontakt stehenden Oberflächen an den beiden Abdichtbereichen 13, 14 an der Dichtkante 70 und der inneren Umfangsfläche 73 des Nebendichtelements 7.

Die in Fig. 2 dargestellten ersten und zweiten Beschichtungen 71, 72 sind in Wirklichkeit deutlich kleiner, insbesondere wenige Zehntel mm und nur zur Verdeutlichung in Fig. 2 breiter eingezeichnet.

Weiterhin umfasst die Gleitringdichtungsanordnung 1 eine Ringfeder 17, welche das segmentierte Nebendichtelement 7 in Radialrichtung mit einer Federkraft F nach innen vorspannt. Dadurch wird einerseits das Nebendichtelement 7, das aus den drei Segmenten S1, S2, S3 besteht, zusammengehalten und andererseits wird ein minimaler Spalt zwischen der inneren Umfangsfläche 73 des Nebendichtelements 7 und der Hülse 8 erreicht. Dadurch wird eine verbesserte Abdichtung an dem zweiten Abdichtungsbereich 14 zwischen Nebendichtelement 7 und Hülse 8 erreicht.

Somit kann an der Rückseite 40 des axial beweglichen stationären, d.h. nicht rotierenden, Gleitrings 4 eine dynamische Abdichtung ermöglicht werden. Die dynamische Abdichtung ist dabei besonders bevorzugt bei Temperaturen bis zu 800°C und sehr hohen Drücken bis zu 250x10⁵ Pa möglich. Insbesondere kann auch auf die Verwendung von Balgelementen zur Abdichtung verzichtet werden.

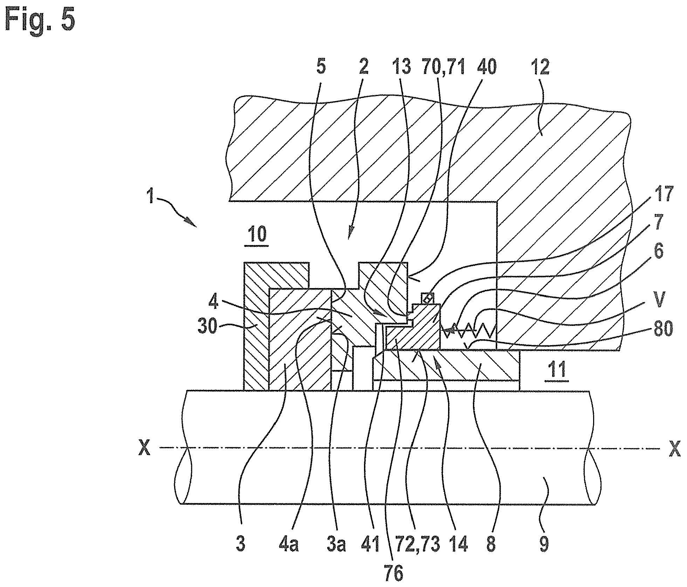

Fig. 5 zeigt eine Gleitringdichtungsanordnung 1 gemäß einem zweiten Ausführungsbeispiel der Erfindung. Gleiche bzw. funktional gleiche Teile sind mit den gleichen Bezugszeichen wie im ersten Ausführungsbeispiel bezeichnet.

Wie aus Fig. 5 ersichtlich ist, weist im Unterschied zum ersten Ausführungsbeispiel der stationäre Gleitring 4 beim zweiten Ausführungsbeispiel einen Rücksprung 41 an der Rückseite 40 auf. Ferner weist das Nebendichtelement 7 einen in Axialrichtung X-X vorstehenden axialen Ringflansch 76 auf.

Wie aus Fig. 5 ersichtlich ist, ist der axiale Ringflansch 76 radial innerhalb des Rücksprungs 41 angeordnet. Durch diese Ausgestaltung wird im Vergleich mit dem ersten Ausführungsbeispiel ein durch das im Produktbereich 10 befindliche und unter hohem Druck stehende abzudichtende Medium eine reduzierte Belastung erreicht. Somit kann eine entlastete Gleitringdichtung bereitgestellt werden, wobei insbesondere die zur Vorspannung nötigen Vorspannkräfte V der Vorspanneinrichtung 6 reduziert werden können. Ansonsten entspricht dieses Ausführungsbeispiel dem vorhergehenden Ausführungsbeispiel, so dass auf die dort gegebene Beschreibung verwiesen werden kann.

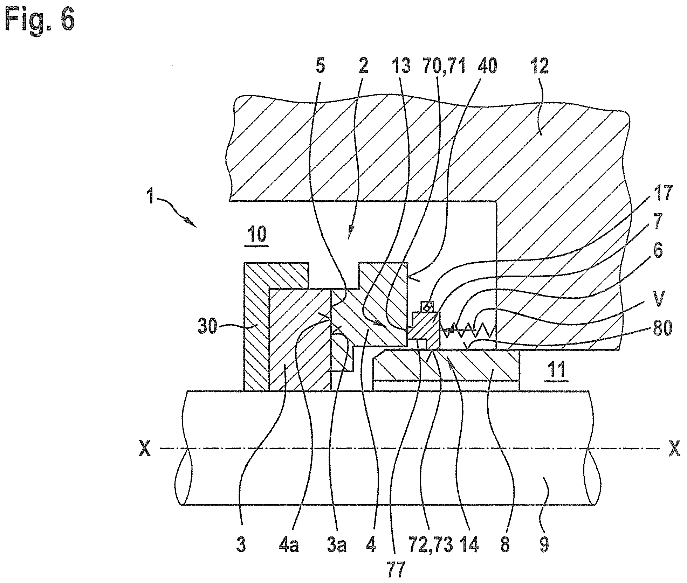

Fig. 6 zeigt eine Gleitringdichtungsanordnung 1 gemäß einem dritten Ausführungsbeispiel der Erfindung, wobei wiederum gleiche bzw. funktional gleiche Teile mit den gleichen Bezugszeichen wie in den vorhergehenden Ausführungsbeispielen bezeichnet sind.

Wie aus Fig. 6 ersichtlich ist, ist beim dritten Ausführungsbeispiel an der inneren Umfangsfläche 73 des Nebendichtelements 7 eine Aussparung 77 vorgesehen. Durch die Aussparung 77 reduziert sich die Abdichtfläche zwischen dem Nebendichtelement 7 und der Hülse 8 am zweiten Abdichtbereich 14 des Nebendichtelements 7.

Weiterhin ist die Dichtkante 70 beim dritten Ausführungsbeispiel radial weiter innen in Richtung zur inneren Umfangsfläche 73 versetzt angeordnet. Dadurch wird im Vergleich mit dem zweiten Ausführungsbeispiel eine deutlich stärker belastete Gleitringdichtung 2 bereitgestellt, da ein Belastungsfaktor der Gleitringdichtung, welcher als Verhältnis einer hydraulisch belasteten Fläche zur Gleitfläche zwischen den Gleitringen 3, 4 definiert ist, deutlich größer ist als beim zweiten Ausführungsbeispiel, da durch die Positionierung der Dichtkante 70 die hydraulisch belastete Fläche deutlich reduziert ist. Ansonsten entspricht dieses Ausführungsbeispiel dem vorhergehenden Ausführungsbeispiel, so dass auf die dort gegebene Beschreibung verwiesen werden kann.

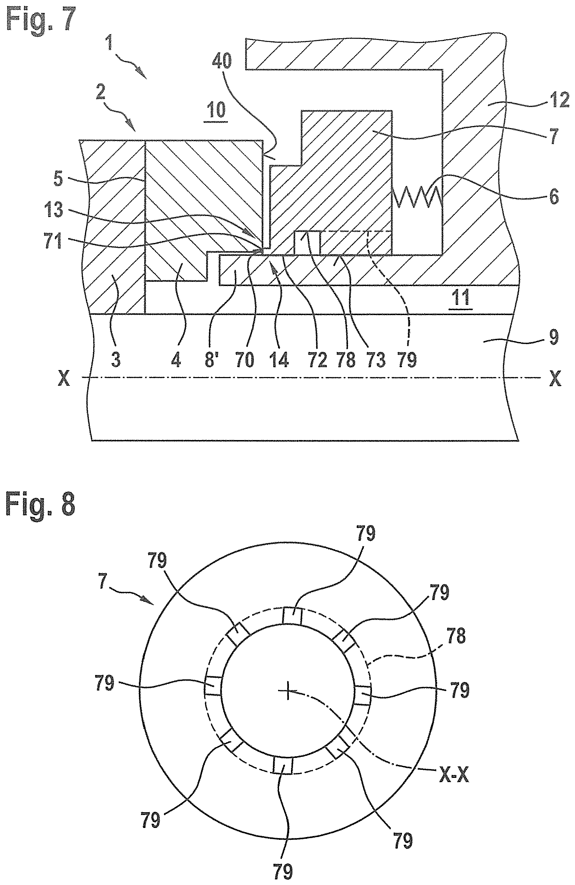

Die Figuren 7 und 8 zeigen eine nicht erfindungsgemäße Gleitringdichtungsanordnung. Gleiche bzw. funktional gleiche Teile sind mit den gleichen Bezugszeichen wie in den vorhergehenden Ausführungsbeispielen bezeichnet.

Wie aus Figur 7 ersichtlich ist, ist das Nebendichtelement 7 unterschiedlich ausgebildet. Das Nebendichtelement 7 weist dabei die Dichtkante 70 am innersten Radius der inneren Umfangsfläche des Nebendichtelementes 7 auf. Dabei weist die Dichtkante 70 ebenfalls eine erste Beschichtung 71 auf. Weiterhin ist ein zweiter Abdichtbereich 14 zwischen dem Nebendichtelement 7 und einem mit dem Gehäuse 12 verbundenen hülsenförmigen Fortsatz 8' am Nebendichtelement 7 nur an dem zum stationären Gleitring 4 gerichteten Bereich vorgesehen. Hierbei ist an diesem zweiten Abdichtbereich 14 die zweite Beschichtung 72 ausgebildet. Somit ist, statt wie in den vorhergehenden Ausführungsbeispielen, keine separate Hülse bei diesem nicht erfindungsgemäßen Beispiel, sondern der hülsenförmige Fortsatz 8' ausgebildet.

Wie weiter aus den Figuren 7 und 8 ersichtlich ist, weist die Nebendichtung 7 ferner eine Ringnut 78 an der inneren Umfangsfläche 73 auf, welche den zweiten Abdichtbereich 14 begrenzt. Ferner sind eine Vielzahl von Axialkanälen 79 am inneren Umfangsbereich vorgesehen, wie insbesondere aus Fig. 8 ersichtlich ist. Die Axialkanäle 79 verbinden dabei den Produktbereich 10 mit der Ringnut 78. Die Zwischenbereiche zwischen den Axialkanälen 79 des Nebendichtelementes 7 dienen dabei zur Abstützung des Nebendichtelementes 7 an dem hülsenförmigen Fortsatz 8.

Da die Dichtkante 70 nun am radial innersten Bereich des Nebendichtelementes 7 angeordnet ist, kann eine Gleitringdichtung bereitgestellt werden, welche in großem Umfang entlastet ist. Die axiale und radiale Abdichtung am Nebendichtelement 7 konzentriert sich bei diesem nicht erfindungsgemäßen Beispiel dabei auf den zum stationären Gleitring 4 gerichteten Eckbereich. Es sei angemerkt, dass am hülsenförmigen Fortsatz 8' selbstverständlich ebenfalls eine dritte Beschichtung wie in den vorhergehenden Ausführungsbeispielen vorgesehen sein kann. Ansonsten entspricht dieses Ausführungsbeispiel den vorhergehenden Ausfüshrungsbeispielen, so dass auf die dort gegebene Bechreibung verwiesen werden kann.

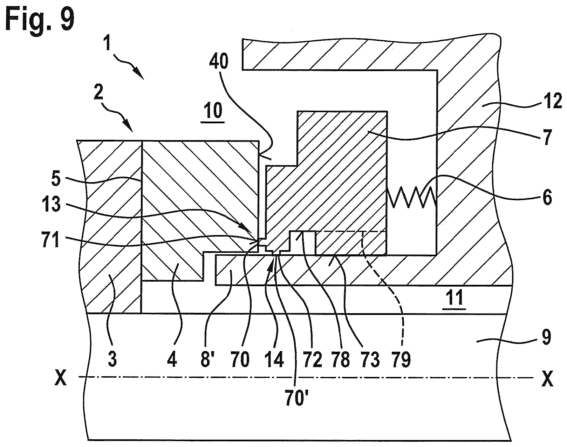

Fig. 9 zeigt eine Gleitringdichtungsanordnung 1 gemäss einem vierten Ausführungsbeispiel der Erfindung, wobei wiederum gleiche bzw. funktional gleiche Teile mit den gleichen Bezugszeichen bezeichnet sind.

Das vierte Ausführungsbeispiel entspricht im wesentlichen dem nicht erfindungsgemäßen Beispiel und weist an der Nebendichtung 7 ebenfalls eine Ringnut 78 und eine Vielzahl von Axialkanälen 79 wie im nicht erfindungsgemäßen Beispiel auf. Im Unterschied zum nicht erfindungsgemäßen Beispiel ist beim vierten Ausführungsbeispiel neben der ersten Dichtkante 70 eine zweite Dichtkante 70' ausgebildet, die , wie in Fig. 9 gezeigt, radial nach innen gerichtet ist. Die zweite Dichtkante 70' dichtet dabei am hülsenförmigen Fortsatz 8', welcher einstückig mit dem Gehäuse 12 gebildet ist, ab. Die zur Rückseite 40 des stationären Gleitringes 4 gerichtete erste Dichtkante 70 dichtet an der Rückseite 40 ab. Auch mit diesem Ausführungsbeispiel kann eine besonders entlastete Dichtung bereitgestellt werden. Vorzugsweise sind an beiden Dichtflächen der Dichtkanten 70, 70' jeweils Beschichtungen, wie vorhergehend beschrieben, vorgesehen. Es sei angemerkt, dass die erste Dichtkante 70, welche an der Rückseite 40 des stationären Gleitringes 4 abdichtet, dabei möglichst weit radial innen an der Nebendichtung 7 angeordnet ist. Dabei ist die Dichtkante 70 radial weiter innen angeordnet als ein Boden der Ringnut 78, wie aus Figur 9 deutlich ersichtlich ist.

Ansonsten entspricht dieses Ausführungsbeispiel den vorhergehenden Ausführungsbeispielen, so dass auf die dort gegebene Beschreibung verwiesen werden kann.

### Bezugszeichenliste

- 1: Gleitringdichtungsanordnung
- 2: Gleitringdichtung
- 3: rotierender Gleitring
- 3a: erste Gleitfläche am rotierenden Gleitring
- 4: stationärer Gleitring (axial vorgespannter Gleitring)
- 4a: zweite Gleitfläche am stationären Gleitring
- 5: Dichtspalt
- 6: Vorspanneinrichtung
- 7: Nebendichtelement
- 8: Hülse
- 8': hülsenförmiger Fortsatz
- 9: Welle
- 10: Produktbereich
- 11: Atmosphärenbereich
- 12: Gehäuse
- 13: erster Abdichtbereich
- 14: zweiter Abdichtbereich
- 17: Ringfeder
- 30: rotierender Gleitringträger
- 40: Rückseite des stationären Gleitrings
- 41: Rücksprung an der Rückseite 40
- 70: erste Dichtkante
- 70': zweite Dichtkante
- 71: erste Beschichtung
- 72: zweite Beschichtung
- 73: innere Umfangsfläche
- 74: Überdeckungsbereich
- 75: Segmentspalt
- 76: axialer Ringflansch
- 77: Aussparung am Nebendichtelement
- 78: Ringnut
- 79: Axialkanäle
- 80: dritte Beschichtung am Außenumfang der Hülse 8
- F: Federkraft der Ringfeder
- H: Höhe in Radialrichtung
- L: Länge in Axialrichtung
- R: Radialrichtung
- S1: erstes Segment
- S2: zweites Segment
- S3: drittes Segment
- V: Vorspannkraft der Vorspanneinrichtung
- X-X: Axialrichtung

## Patentansprüche

1. Gleitringdichtungsanordnung (1), umfassend:
- eine Gleitringdichtung (2) mit einem rotierenden Gleitring (3) mit einer ersten Gleitfläche (3a) und einem stationären Gleitring (4) mit einer zweiten Gleitfläche (4a), welche zwischen sich einen Dichtspalt (5) definieren,
- eine Vorspanneinrichtung (6), um einen der beiden Gleitringe in Axialrichtung (X-X) vorzuspannen,
- ein Nebendichtelement (7), welches an einer Rückseite (40) des axial vorgespannten Gleitrings angeordnet ist, wobei die Vorspanneinrichtung (6) den axial vorgespannten Gleitring über das Nebendichtelement (7) vorspannt, und
- eine Hülse (8), welche radial innerhalb des Nebendichtelements (7) angeordnet ist,
- wobei das Nebendichtelement (7) ferner mit einer inneren Umfangsfläche (73) am Außenumfang der Hülse (8) abdichtet,
- wobei das Nebendichtelement (7) eine in Umfangsrichtung ringförmig geschlossene Dichtkante (70) aufweist, welche vom Nebendichtelement (7) in Axialrichtung (X-X) zum axial vorgespannten Gleitring vorsteht, und
- wobei die Dichtkante (70) an der Rückseite (40) des axial vorgespannten Gleitrings abdichtet, **dadurch gekennzeichnet, dass**
- das Nebendichtelement (7) in Umfangsrichtung in mehrere Segmente (S1, S2, S3) unterteilt ist.

2. Gleitringdichtungsanordnung nach Anspruch 1, wobei das Nebendichtelement (7) aus einem harten Material mit einer Härte ≥ 2000 HV hergestellt ist.

3. Gleitringdichtungsanordnung nach Anspruch 2, wobei das Nebendichtelement (7) aus einem keramischen Material, insbesondere Siliziumkarbid oder Wolframkarbid, hergestellt ist.

4. Gleitringdichtungsanordnung nach einem der vorhergehenden Ansprüche, wobei eine Härte des Nebendichtelements (7) mindestens gleich groß ist wie eine Härte des axial vorgespannten Gleitrings.

5. Gleitringdichtungsanordnung nach einem der vorhergehenden Ansprüche, wobei der axial vorgespannte Gleitring und das Nebendichtelement (7) aus dem gleichen Material hergestellt sind oder
- wobei der axial vorgespannte Gleitring und das Nebendichtelement (7) und die Hülse (8) aus einem gleichen Material hergestellt sind.

6. Gleitringdichtungsanordnung nach einem der vorhergehenden Ansprüche, wobei das Nebendichtelement (7) an einer Stirnseite der Dichtkante (70) eine erste Beschichtung (71) aufweist und/oder wobei das Nebendichtelement (7) an der inneren Umfangsfläche (73) eine zweite Beschichtung (72) aufweist.

7. Gleitringdichtungsanordnung nach einem der vorhergehenden Ansprüche, wobei die Hülse (8) an ihrem Außenumfang eine dritte Beschichtung (80) aufweist.

8. Gleitringdichtungsanordnung nach Anspruch 6 oder 7, wobei die erste Beschichtung (71) und/oder die zweite Beschichtung (72) und/oder die dritte Beschichtung (80) aus dem gleichen Material hergestellt sind und die Beschichtungen alle gleich dick ausgeführt sind.

9. Gleitringdichtungsanordnung nach Anspruch 1, wobei das Nebendichtelement (7) mittels eines Vorspannelements (17) radial nach innen vorgespannt ist.

10. Gleitringdichtungsanordnung nach einem der vorhergehenden Ansprüche, wobei die Dichtkante (70) einen viereckigen Querschnitt aufweist.

11. Gleitringdichtungsanordnung nach Anspruch 10, wobei eine Höhe (H) der Dichtkante (70) in Radialrichtung (R) größer ist als eine Länge (L) der Dichtkante (70) in Axialrichtung (X-X).

12. Gleitringdichtungsanordnung nach einem der vorhergehenden Ansprüche, wobei die Dichtkante (70) an einem radial inneren Eckbereich des Nebendichtelementes (7) angeordnet ist.

13. Gleitringdichtungsanordnung nach einem der vorhergehenden Ansprüche, ferner umfassend einen weiteren Dichtbereich (70'), welcher an der inneren Umfangsfläche (73) des Nebendichtelementes (7) angeordnet ist.

## Claims

1. A mechanical seal arrangement (1), comprising:
- a mechanical seal (2) comprising a rotating sliding ring (3) having a first sliding surface (3a) and a stationary sliding ring (4) having a second sliding surface (4a), defining a sealing gap (5) therebetween,
- a pre-tensioning device (6) for pre-tensioning one of the two sliding rings in the axial direction (X-X)
- a secondary sealing member (7) arranged on a rear side (40) of the axially pre-tensioned seal ring, the pre-tensioning device (6) pre-tensioning the axially pre-tensioned seal ring via the secondary sealing member (7), and
- a sleeve (8) which is arranged radially inside the secondary sealing member (7),
- wherein the secondary sealing member (7) further seals on the outer circumference of the sleeve (8) with an inner circumferential surface (73),
- wherein the secondary sealing member (7) has a circumferentially annularly closed sealing edge (70) which projects from the secondary sealing member (7) towards the axially pre-tensioned sliding ring in the axial direction (X-X), and
- wherein the sealing edge (70) seals against the rear side (40) of the axially pre-tensioned sliding ring, **characterized in that** the secondary sealing member (7) is divided into a plurality of segments (S1, S2, S3) in the circumferential direction.

2. The mechanical seal arrangement according to claim 1, wherein the secondary sealing member (7) is made of a hard material having a hardness ≥ 2000 HV.

3. The mechanical seal arrangement according to claim 2, wherein the secondary sealing member (7) is made of a ceramic material, in particular silicon carbide or tungsten carbide.

4. The mechanical seal arrangement according to one of the preceding claims, wherein a hardness of the secondary sealing member (7) is at least equal to a hardness of the axially pre-tensioned seal ring.

5. The mechanical seal arrangement according to one of the preceding claims,
wherein the axially pre-tensioned seal ring and the secondary sealing member (7) are made of the same material or
- wherein the axially pre-tensioned mechanical seal ring and the secondary sealing member (7) and the sleeve (8) are made of the same material.

6. The mechanical seal arrangement according to one of the preceding claims, wherein the secondary sealing member (7) has a first coating (71) on an end face of the sealing edge (70) and/or wherein the secondary sealing member (7) has a second coating (72) on the inner circumferential surface (73).

7. The mechanical seal arrangement according to one of the preceding claims, wherein the sleeve (8) has a third coating (80) on its outer circumference.

8. The mechanical seal arrangement according to claim 6 or 7, wherein the first coating (71) and/or the second coating (72) and/or the third coating (80) are made of the same material and the coatings are all made of the same thickness.

9. The mechanical seal arrangement according to claim 1, wherein the secondary sealing member (7) is pre-tensioned radially inwards using a pre-tensioning element (17).

10. The mechanical seal arrangement according to one of the preceding claims, wherein the sealing edge (70) has a quadrangular cross-section.

11. The mechanical seal arrangement according to claim 10, wherein a height (H) of the sealing edge (70) in radial direction (R) is greater than a length (L) of the sealing edge (70) in axial direction (X-X).

12. The mechanical seal arrangement according to one of the preceding claims, wherein the sealing edge (70) is arranged at a radially inner corner region of the secondary sealing member (7).

13. The mechanical seal arrangement according to one of the preceding claims, further comprising another sealing portion (70') arranged at the inner circumferential surface (73) of the secondary sealing member (7).

## Revendications

1. Ensemble d'étanchéité à bague coulissante (1), comprenant :
- une garniture mécanique d'étanchéité (2) avec une bague de glissement (3) rotative avec une première surface de glissement (3a) et une bague de glissement (4) stationnaire avec une deuxième surface de glissement (4a), qui définissent un interstice d'étanchéité (5) entre elles,
- un dispositif de précontrainte (6) pour précontraindre l'une des deux bagues de glissement dans la direction axiale (X-X),
- un élément d'étanchéité secondaire (7), qui est disposé sur une face arrière (40) de la bague de glissement précontrainte axialement, dans lequel le dispositif de précontrainte (6) précontraint la bague de glissement précontrainte axialement par l'intermédiaire de l'élément d'étanchéité secondaire (7), et
- une douille (8) qui est disposée radialement à l'intérieur de l'élément d'étanchéité secondaire (7),
- dans lequel l'élément d'étanchéité secondaire (7) assure en outre l'étanchéité avec une surface périphérique intérieure (73) sur la circonférence extérieure de la douille (8),
- dans lequel l'élément d'étanchéité secondaire (7) présente un bord d'étanchéité (70) en forme d'anneau fermée dans le sens circonférentiel, qui dépasse de l'élément d'étanchéité secondaire (7) dans la direction axiale (X-X) vers la bague de glissement précontrainte axialement, et
- dans lequel le bord d'étanchéité (70) assure l'étanchéité sur la face arrière (40) de la bague de glissement précontrainte axialement, **caractérisé en ce que**
- l'élément d'étanchéité secondaire (7) est divisé en plusieurs segments (S1, S2, S3) dans le sens circonférentiel.

2. Dispositif d'étanchéité mécanique selon la revendication 1, dans lequel l'élément d'étanchéité secondaire (7) est fabriqué dans un matériau dur d'une dureté ≥ 2000 HV.

3. Ensemble d'étanchéité mécanique selon la revendication 2, dans lequel l'élément d'étanchéité secondaire (7) est fabriqué dans un matériau céramique, en particulier du carbure de silicium ou du carbure de tungstène.

4. Ensemble d'étanchéité mécanique selon l'une quelconque des revendications précédentes, dans lequel une dureté de l'élément d'étanchéité secondaire (7) est au moins égale à une dureté de la bague mécanique précontrainte axialement.

5. Ensemble d'étanchéité mécanique selon l'une quelconque des revendications précédentes, dans lequel la bague de glissement précontrainte axialement et l'élément d'étanchéité secondaire (7) sont fabriqués dans le même matériau ou
- dans lequel la bague de glissement précontrainte axialement et l'élément d'étanchéité secondaire (7) et la douille (8) sont réalisés dans un même matériau.

6. Ensemble d'étanchéité mécanique selon l'une quelconque des revendications précédentes, dans lequel l'élément d'étanchéité secondaire (7) présente une première couche (71) sur une face frontale du bord d'étanchéité (70) et/ou dans lequel l'élément d'étanchéité secondaire (7) présente une deuxième couche (72) sur la surface périphérique intérieure (73).

7. Ensemble d'étanchéité mécanique selon l'une quelconque des revendications précédentes, dans lequel la douille (8) présente sur sa circonférence extérieure une troisième couche (80).

8. Ensemble d'étanchéité mécanique selon la revendication 6 ou 7, dans lequel la première couche (71) et/ou la deuxième couche (72) et/ou la troisième couche (80) sont réalisées dans le même matériau et les couches sont toutes de la même épaisseur.

9. Ensemble d'étanchéité mécanique selon la revendication 1, dans lequel l'élément d'étanchéité secondaire (7) est précontraint radialement vers l'intérieur au moyen d'un élément de précontrainte (17).

10. Ensemble d'étanchéité mécanique selon l'une quelconque des revendications précédentes, dans lequel le bord d'étanchéité (70) présente une section transversale à quatre côtés.

11. Ensemble d'étanchéité mécanique selon la revendication 10, dans lequel une hauteur (H) du bord d'étanchéité (70) dans la direction radiale (R) est supérieure à une longueur (L) du bord d'étanchéité (70) dans la direction axiale (X-X).

12. Ensemble d'étanchéité mécanique selon l'une quelconque des revendications précédentes, dans lequel le bord d'étanchéité (70) est disposé sur une zone d'angle radialement intérieure de l'élément d'étanchéité secondaire (7).

13. Ensemble d'étanchéité mécanique selon l'une quelconque des revendications précédentes, comprenant en outre une autre zone d'étanchéité (70'), qui est disposée sur la surface périphérique intérieure (73) de l'élément d'étanchéité secondaire (7).
